# EUROPEAN PATENT APPLICATION

(11) **EP 4 597 688 A1**
(43) Date of publication of application: **06.08.2025**
(21) Application number: 24222899.7
(22) Date of filing: 23.12.2024
(51) Int. Cl.: H01M 10/613, H01M 10/627, H01M 10/63

(54) **APPARATUS, ENERGY STORAGE SYSTEM AND METHOD FOR BATTERY COOLING CONTROL**

(30) Priority: 08.01.2024 KR 20240003025
(71) Applicant: SAMSUNG SDI CO., LTD., Yongin-si, Gyeonggi-do 17084 (KR)
(72) Inventor: Ko, Sungmin, 17084 Yongin-si, Gyeonggi-do (KR)
(74) Representative: Gulde & Partner

(57) **Abstract**

The present disclosure relates to an apparatus and method for battery cooling control. An apparatus for battery cooling control according to some embodiments includes a cooling water control apparatus configured to control the supply of cooling water for cooling a battery system, and a control apparatus configured to obtain the state of charge and charge/discharge rate of the battery system, determine a heating value of the battery system according to the state of charge and the charge/discharge rate, and control the cooling water control apparatus to control the supply of the cooling water according to the heating value.

## Description

### FIELD

The present disclosure relates to an apparatus, energy storage system and method for battery cooling control.

### BACKGROUND

In general, a primary battery is not rechargeable, but a secondary battery can be charged and discharged. Low-capacity secondary batteries are used in portable small-sized electronic devices such as a smartphone, a feature phone, a notebook computer, a digital camera, a camcorder and the like, and high-capacity secondary batteries are extensively used as a power source and a power storage device for driving a motor for a hybrid vehicle and/or an electric vehicle. The secondary battery may include an electrode assembly having a positive electrode and a negative electrode, a case accommodating the electrode assembly, and an electrode terminal connected to the electrode assembly.

The above information disclosed in this Background section is only for enhancement of understanding of the background of the described technology and therefore it may contain information that does not form prior art.

### SUMMARY

According to some embodiments, the present disclosure provides an apparatus for battery cooling control with improved power consumption and a method thereof.

Technical solutions obtainable from the present disclosure are not limited the above-mentioned technical solutions. And, other unmentioned technical solutions can be clearly understood from the following description by those having ordinary skill in the technical field to which the present disclosure pertains.

An apparatus for battery cooling control, according to embodiments for solving the technical objects described herein, may include a cooling water control apparatus configured to control the supply of cooling water for cooling a battery system, and a control apparatus configured to obtain a state of charge and a charge/discharge rate of the battery system, determine a heating value of the battery system according to the state of charge and the charge/discharge rate, and control the cooling water control apparatus to control the supply of the cooling water according to the heating value.

The apparatus for battery cooling control may further include a storage apparatus configured to store a heating value table mapping corresponding heating values for each state of charge and charge/discharge rate of a battery cell. The control apparatus may be further configured to determine the heating value of the battery system by referring to the heating value table.

The control apparatus may be further configured to obtain operation mode information of the battery system and control the cooling water control apparatus to control the supply of the cooling water according to the operation mode information.

The control apparatus may be further configured to control the cooling water control apparatus so that a flow rate of the cooling water is at a predetermined value if the operation mode of the battery system is an idle mode. The predetermined value may be set so that the supply of the cooling water when the battery system is operating in the idle mode is lower than the supply of the cooling water when the battery system is operating in a charge mode or a discharge mode.

The battery system may include a plurality of battery racks. A cooling water passage through which the cooling water flows when flowing may be provided for each of the plurality of battery racks. The cooling water control apparatus may be further configured to control the flow amount of the cooling water supplied to the cooling water passage provided for each of the plurality of battery racks. The control apparatus may be further configured to determine a heating value for each of the plurality of battery racks and control the cooling water control apparatus to control a supply of the cooling water according to the heating value of each of the plurality of racks.

A method of cooling control of an apparatus for battery cooling control, according to some embodiments, includes obtaining a state of charge and a charge/discharge rate of a battery system; determining a heating value of the battery system according to the state of charge and the charge/discharge rate; and controlling a supply of cooling water for cooling the battery system according to the heating value.

The determining of the heating value may include determining the heating value of the battery system by referring to a heating value table mapping corresponding heating values for each state of charge and charge/discharge rate of a battery cell.

The method of cooling control may further include obtaining operation mode information of the battery system. The determining of the heating value and the controlling of the supply of the cooling water may be performed while the battery system operates in a charge mode or a discharge mode.

The method of cooling control may further include controlling the supply of the cooling water so that a flow rate of the cooling water is a predetermined value if the operation mode of the battery system is an idle mode. The predetermined value may be set so that the supply of the cooling water when the battery system is operating in the idle mode is lower than the supply of the cooling water when the battery system is operating in the charge mode or discharge mode.

The determining of the heating value may include determining the heating value for each of a plurality of battery racks included in the battery system. The controlling of the supply of the cooling water may include controlling the supply of the cooling water to each of the plurality of racks according to the heating value determined for each of the plurality of racks.

According to the present disclosure, it is possible to improve power consumption of a battery cooling control apparatus. Accordingly, the operating cost of the system to which the cooling apparatus applied may be reduced.

Effects that may be obtained from the present disclosure will not be limited to only the effects described herein. In addition, other effects which are not described herein will become apparent to those skilled in the art from the following description.

### BRIEF DESCRIPTION OF THE DRAWINGS

The accompanying drawings illustrate exemplary embodiments of the present disclosure and, together with the foregoing disclosure, serve to provide further understanding of the technical spirit of the present disclosure. However, the present disclosure is not to be construed as being limited to the drawings.
FIG. 1 schematically illustrates an energy storage system, according to some embodiments.
FIG. 2 schematically illustrates an apparatus for battery cooling control, according to some embodiments.
FIG. 3 illustrates an example of a heating value table, according to some embodiments.
FIG. 4 schematically illustrates a method of battery cooling control, according to some embodiments.
FIGS. 5A and 5B illustrate examples of cooling water passages in a battery system according to an embodiment.

### DETAILED DESCRIPTION

Hereinafter, exemplary embodiments of the present disclosure will be described in detail with reference to the accompanying drawings. The terms or words used in the specification and claims of the present disclosure should not be interpreted as being limited to typical or dictionary meanings, and are constructed as meanings and concepts conforming to and consistent with the technical spirit of the present disclosure based on the principle that the inventors can appropriately define the concepts of the terms to explain the present disclosure in the most appropriate manner. Accordingly, it is to be understood that the detailed description, which will be disclosed along with the accompanying drawings, is intended to describe the exemplary embodiments of the present disclosure and is not intended to represent all technical ideas of the present disclosure. Therefore, it should be understood that various equivalents and modifications can exist which can replace the embodiments described herein at the time of the application.

It will be further understood that the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof. In addition, when describing embodiments of the present disclosure, "may" and "may be" may include "one or more embodiments of the present disclosure."

In addition, for ease of understanding of the present disclosure, the accompanying drawings are not drawn to real scale, but the dimensions of some components may be exaggerated. In addition, the same reference numbers may be assigned to the same components in different embodiments.

Stating that two objects of comparison are 'the same' means that they are 'substantially the same'. Therefore, substantially identical may include a deviation that is considered low in the art, for example, a deviation of less than 5%. Additionally, uniformity of a parameter in a certain region may mean uniformity from an average perspective.

Although terms of "first," "second," and the like are used to explain various constituent elements, the constituent elements are not limited to such terms. These terms are only used to distinguish one constituent element from another constituent element. Unless explicitly described to the contrary, the second constituent element may be referred to as the first constituent element.

Throughout the specification, unless otherwise stated, each component may be singular or plural.

It will also be understood that when a first element or layer is referred to as being present "on" or "beneath" a second element or layer, the first element may be disposed directly on or beneath the second element or may be disposed indirectly on or beneath the second element with a third element or layer being disposed between the first and second elements or layers.

It should be noted that if it is described in the specification that one component is "connected," "coupled" or "joined" to another component, a third component may be "connected," "coupled," and "joined" between the first and second components, although the first component may be directly connected, coupled or joined to the second component. When it is described that an element is "electrically coupled" to another element, the element may be "directly coupled" to the other element or "coupled" to the other element through a third element.

When referring to "A and/or B" throughout the specification, it means A, B or A and B, unless specifically stated to the contrary. That is, "and/or" includes all or any combination of the plurality of listed items. When referring to "C to D", it means that it is greater than or equal to C and less than or equal to D, unless otherwise specified.

An energy storage system (ESS), which has recently emerged worldwide, is a system that stores a large amount of electrical energy in batteries and supplies the stored electrical energy in the batteries when electrical energy is needed to increase energy use efficiency. ESS can require a cooling system to solve battery heat dissipation issues, and the power consumption of the cooling system is directly related to the operating cost of the ESS.

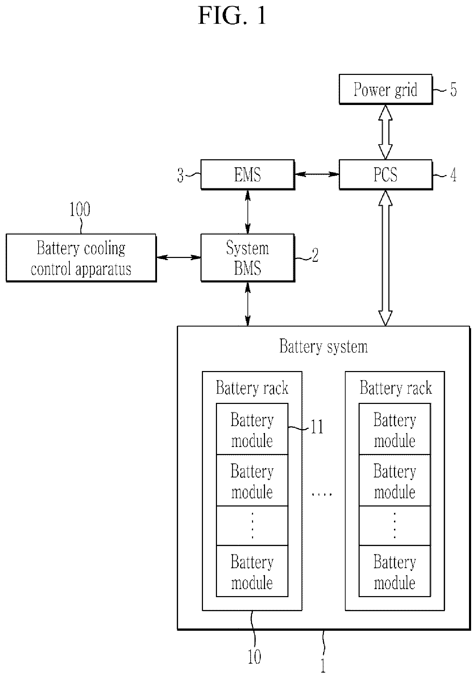

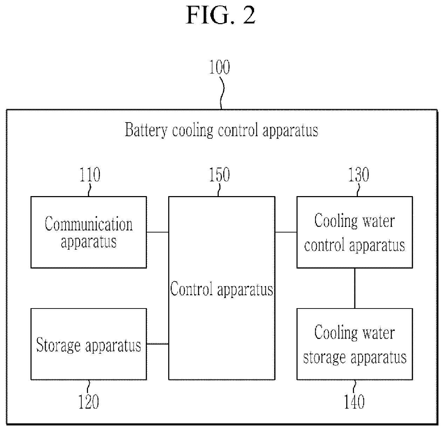

FIG. 1 schematically illustrates an energy storage system (ESS), according to some embodiments. Additionally, FIG. 2 schematically illustrates an apparatus for battery cooling control, according to some embodiments.

Referring to FIG. 1, the ESS may include a battery system 1, a system battery management system (BMS) 2, an energy management system (EMS) 3, and a power conversion system (PCS) 4.

The battery system 1 may include a plurality of battery cells (not shown) connected to each other in series or parallel. For example, the battery system 1 may include a plurality of battery racks 10 that are electrically connected to each other in series or parallel. Additionally, each of the battery racks 10 may include a plurality of battery modules 11 that are electrically connected to each other in series or parallel. Additionally, each of the battery modules 11 may include a plurality of battery cells (not shown) that are electrically connected to each other in series or parallel.

The battery system 1 may charge the battery system 1 using electrical energy supplied from a grid 5 through the PCS 4. Additionally, the PCS 4 may supply the electrical energy stored in the battery system 1 to the power grid 5 through the PCS 4.

The PCS 4 may operate as a power conversion device that converts the characteristics of electricity (direct current (DC), alternating current (AC), voltage, frequency, etc.) to transfer electrical energy between the battery system 1 and the power grid 5. Typically, electric energy in the form of DC is used in the battery system 1, and electric energy in the form of AC is used in the power grid 5. Therefore, the PCS 4 may transfer the electrical energy stored in the battery system 1 to the power grid 5 through DC-AC conversion, or transfer the electrical energy supplied from the power grid 5 to the battery system 1 through AC-DC conversion.

In addition to the power conversion and distribution functions described above, the PCS 4 may also perform a function of controlling electricity quality, such as active power and reactive power of the ESS. The PCS 4 may also perform a monitoring/control function to monitor the voltage and operating status of the ESS. The PCS 4 may also perform a grid-connected protection function that protects the power grid 5 during power outages. The PCS 4 may also perform independent operation functions such as operating the ESS by utilizing the battery system 1 even when there is no power source.

The battery system 1 may be managed by the system BMS 2. The system BMS 2 may monitor the status of the battery system 1 and control the battery system 1 to operate in an optimal state. The system BMS 2 may perform state monitoring functions (e.g., monitoring cell voltage, current, temperature, state of charge (SOC), state of health (SOH), charge/discharge rate (C-rate)) for battery cells that configure battery system 1, control functions (e.g., temperature control, cell balancing control), and protection functions (e.g., over-discharge, overcharge, overcurrent prevention).

The system BMS 2 may collect status data (cell voltage, SOC, current, charge/discharge rate, temperature, etc.) from the battery system 1 to monitor the status of the battery system 1. The battery racks 10 configuring the battery system 1 may collect status data from their own battery modules 11 and transmit the status data to the system BMS 2. Battery racks 10 that configure the battery system 1 may communicate with other battery racks 10 or the system BMS 2 through controller area network (CAN) communication and may transmit and receive data in a daisy chain manner.

The EMS 3 is an integrated control apparatus that may monitor and control the power use of the power grid 5 and the power supply of the ESS in real time for efficient energy operation of the ESS. The EMS 3 may monitor the status of the entire system (battery system 1, system BMS 2, and PCS 4) configuring the ESS and may control the operation of the ESS.

The battery system 1 may be charged and discharged according to at least one charge and discharge cycle every day. One charge/discharge cycle may include a charge period, an idle period after charge, a discharge period, and an idle period after discharge.

The ESS may further include a battery cooling control apparatus 100. The battery cooling control apparatus 100 may supply cooling water to the battery system 1 to cool the battery system 1. The battery cooling control apparatus 100 may adjust the flow amount (or flow rate) of cooling water supplied to the battery system 1 according to the operation mode (charge mode, discharge mode, idle mode) and heat dissipation state of the battery system 1.

Referring to FIG. 2, the battery cooling control apparatus 100 may include a communication apparatus 110, a storage apparatus 120, a cooling water control apparatus 130, a cooling water storage apparatus 140, and a control apparatus 150.

The communication apparatus 110 may perform a communication function between the battery cooling control apparatus 100 and another apparatus (e.g., system BMS 2). For example, the communication apparatus 110 may receive operation mode information of the battery system 1 from the system BMS 2. Additionally, for example, the communication apparatus 110 may receive status information (charge/discharge rate (C-rate), SOC, etc.) of the battery system 1 from the system BMS 2.

The storage apparatus 120 may store a program for operating the control apparatus 150, which will be described later. The storage apparatus 120 may include at least one computer-readable medium. The computer-readable medium may include, for example, a USB disk, a mobile hard disk, a read-only memory (ROM), a random access memory (RAM), flash memory, memory card, storage medium and/or other kinds of media capable of storing program codes.

The storage apparatus 120 may store various data and information processed by the battery cooling control apparatus 100. For example, the storage apparatus 120 may store a heating value table. The heating value of a battery cell may increase as the charge/discharge rate increases and the SOC decreases. In other words, the heating value of a battery cell may vary depending on the SOC of the battery cell even if the battery cell is charged/discharged at the same charge/discharge rate. Therefore, the heating value table may be composed of a heating value that varies depending on not only the charge/discharge rate of the battery cell but also the SOC in the form of a look-up table.

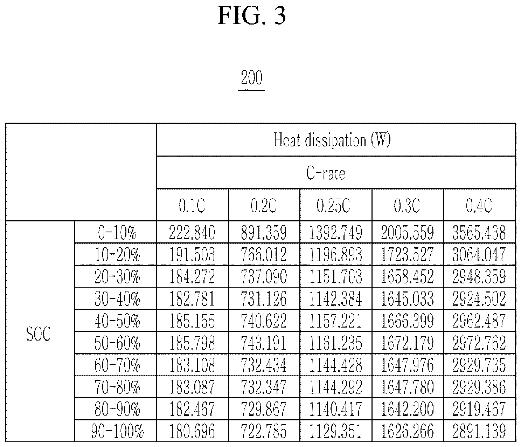

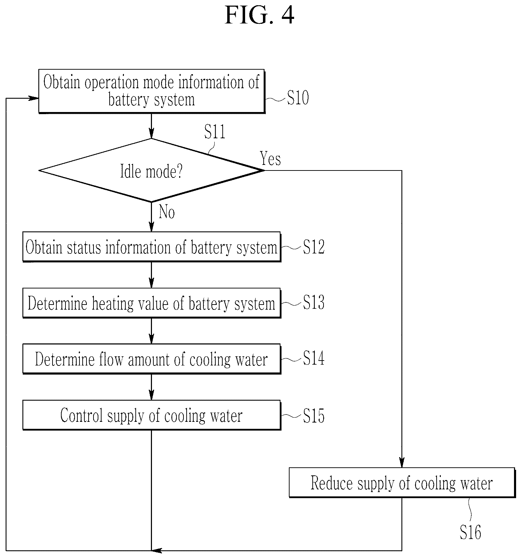

FIG. 3 illustrates an example of a heating value table, according to some embodiments. Referring to FIG. 3, a heating value table 200 may include a plurality of SOC sections (0%-10%, 10%-20%, 20%-30%, 30%-40%, 40%-50%, 50%-60%, 60%-70%, 70%-80%, 80%-90%, 90%-100%). Additionally, the heating value table 200 may include heating value (heating value of the battery cell) data for each charge/discharge rate for each SOC section. In the heating value table of FIG. 4, the heating value data of the battery cell may be expressed in watts [W] and the charge/discharge rate may be expressed in C-rate (current rate) [C]. The C-rate is a measure of the rate at which a battery cell is charged or discharged relative to its capacity. It is the charge or discharge current in Amps divided by cell capacity of the battery cell in Ampere-hours. For example, charging at a C-rate of 1C means that the battery cell is charged from 0% to 100% in one hour. In some embodiments, the heating value table may map corresponding heating values for each state of charge and charge/discharge rate of a battery cell.

Again, looking at FIG. 2, the cooling water control apparatus 130 may control the cooling water that may be supplied to a cooling water passage of the battery system 1 for cooling the battery system 1. The cooling water control apparatus 130 may include a cooling water pump, a cooling water valve, etc. The cooling water control apparatus 130 may increase or decrease the amount of cooling water supplied from the cooling water storage apparatus 140 to the battery system 1 according to the control of the control apparatus 150, which will be described later. For example, the cooling water storage apparatus 140 may include a cooling water reserve, a cooling water tank, a cooling water container, a cooling water tower, and the like.

The control apparatus 150 may control the overall operation of the battery cooling control apparatus 100.

The control apparatus 150 may receive operation mode information of the battery system 1 from the system BMS 2 through the communication apparatus 110. The control apparatus 150 may receive or obtain status information including the charge/discharge rate and SOC of a plurality of battery cells included in the battery system 1 from the system BMS 2.

The control apparatus 150 may adjust the supply of cooling water according to the operation mode of the battery system 1. The control apparatus 150 may control the cooling water control apparatus 130 so that the flow amount of cooling water supplied during the idle mode of the battery system 1 is reduced compared to the flow amount of cooling water supplied during the charge mode and discharge mode of the battery system 1.

When the battery system 1 enters the idle mode, the control apparatus 150 may control the cooling water control apparatus 130 to reduce the flow rate of the cooling water supplied for cooling the battery system 1 to a predetermined value (e.g., 20 LPM (Liter Per Minute)), thereby lowering the flow amount of cooling water supplied to the battery system 1 during idle mode. The predetermined value may be set so that the supply of the cooling water when the battery system is operating in the idle mode is lower than the supply of the cooling water when the battery system is operating in a charge mode or a discharge mode.

When the battery system 1 enters the charge mode or the discharge mode, the control apparatus 150 may control the cooling water control apparatus 130 to increase the flow rate of cooling water supplied for cooling the battery system 1, thereby increasing the flow amount of cooling water supplied to the battery system 1. In the charge mode and discharge mode of the battery system 1, the flow rate of cooling water supplied for cooling the battery system 1 may vary depending on the heat dissipation state of the battery system 1.

The control apparatus 150 may determine the heating value according to the state (SOC and charge/discharge rate) of the battery system 1 by referring to the status information received from the system BMS 2 and the heating value table. The control apparatus 150 may determine the heating value according to the SOC and charge/discharge rate of the battery cell by referring to the heating value table. Once the heating value of the battery cells is determined, the control apparatus 150 may determine the heating value of each battery module 11 based on the heating value of the battery cells. Additionally, once the heating value of the battery modules 11 is determined, the control apparatus 150 may determine the heating value of each battery rack 10 based on the heating value of the battery modules 11. Additionally, once the heating value of the battery racks 10 is determined, the control apparatus 150 may determine the heating value of the entire battery system 1 based on the heating value of the battery racks 10.

When the heating value of the battery system 1 is determined, the control apparatus 150 may determine the flow amount of cooling water supplied for cooling the battery system 1 based on the determined heating value. When the cooling water flow amount to be supplied to the battery system 1 is determined, the control apparatus 150 may control the cooling water control apparatus 130 to adjust the cooling water flow rate according to the determined cooling water flow amount.

In the battery system 1, a cooling water flow passage may be formed for each battery rack 10. The cooling water, when flowing, may flow through the cooling water passage provided for each rack at a flow rate. The cooling water passage formed in each battery rack 10 may be used only for cooling the corresponding battery rack 10. In this case, the cooling water control apparatus 130 may adjust the flow amount of cooling water supplied to the cooling water passage for each battery rack 10. Additionally, the control apparatus 150 may determine the cooling water flow amount corresponding to each battery rack 10 based on the heating value of each battery rack 10 determined with reference to the heating value table. Once the cooling water flow amount is determined for each battery rack 10, the control apparatus 150 may control the cooling water control apparatus 130 to adjust the cooling water supplied to the cooling water passage of each battery rack 10 based on this.

The control apparatus 150 may include at least one processor. The processor may refer to a data processing device having a physically structured circuit to perform a function expressed by code or instructions included in a program, such as a microprocessor, a central processing unit (CPU), a processor core, a multiprocessor, an application-specific integrated circuit (ASIC), a field programmable gate array (FPGA), and the like.

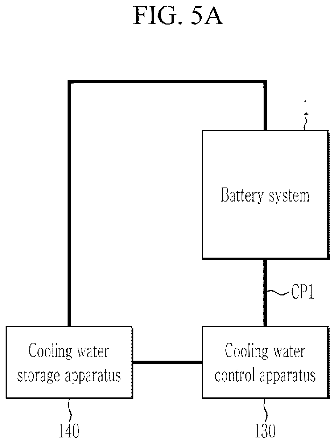

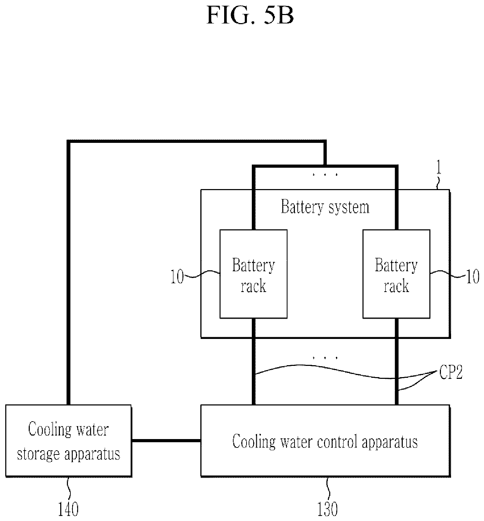

FIG. 4 schematically illustrates a method of battery cooling control, according to some embodiments. FIGS. 5A and 5B illustrate examples of cooling water passages in a battery system according to an embodiment.

Referring to FIG. 4, the battery cooling control apparatus 100, according to some embodiments, obtains the operation mode information of the battery system 1 from the system BMS 2 (step S10), and determines whether the operation mode of the battery system 1 is in idle mode (step S11).

If it is determined in step S11 that the operation mode of the battery system 1 is not in the idle mode, the battery cooling control apparatus 100 obtains status information (SOC, charge and discharge rate (C-rate)) of the battery system 1 from the system BMS 2 (step S12). Then, the battery cooling control apparatus 100 determines the heating value of the battery system 1 by referring to the state/status information obtained through step S12 and the heating value table (step S13).

In step S13, the battery cooling control apparatus 100 may obtain the heating value corresponding to the SOC and charge/discharge rate of each battery cell from the heating value table and may use the heating value to determine the heating value of the battery cells included in the battery system 1. Once the heating value of the battery cell is determined, the battery cooling control apparatus 100 may obtain the heating value of each battery rack 10 or the entire battery system 1 based on the heating value of the battery cells.

The battery cooling control apparatus 100 may determine the flow amount of cooling water to be supplied for cooling the battery system 1 according to the heating value determined in step S13 (step S14). Then, the battery cooling control apparatus 100 may control the supply of cooling water according to the cooling water flow amount determined in step S14 (step S15).

Referring to FIG. 5A, the battery system 1 may have one cooling water passage CP1 passing through the entire battery system 1, and the cooling water control apparatus 130 may be configured to adjust the cooling water supplied to the cooling water passage CP1. In this case, in steps S14 and S15, the battery cooling control apparatus 100 may determine the cooling water flow amount supplied to the cooling water passage CP1 based on the heating value of the entire battery system 1 and control the cooling water control apparatus 130 according to the determined cooling water flow amount.

Referring to FIG. 5B, the battery system 1 may be provided with a cooling water passage CP2 for each of the plurality of battery racks 10, and the cooling water control apparatus 130 may be configured to control the supply of cooling water for each of the plurality of battery racks 10. In this case, the battery cooling control apparatus 100 may determine the cooling water flow amount supplied to the cooling water passage CP2 for each battery rack 10 in step S14. Additionally, in step S15, the battery cooling control apparatus 100 may control the cooling water control apparatus 130 according to the cooling water flow amount determined for each battery rack 10 to adjust the supply of cooling water for each battery rack 10 (e.g., controlling the supply to each rack according to the heating value determined for each rack).

In some embodiments, determining the heating value and controlling the supply of the cooling water may be performed while the battery system operates in a charge mode or a discharge mode.

Meanwhile, if it is determined in step S11 that the operation mode of the battery system 1 is in the idle mode, the battery cooling control apparatus 100 may reduce the supply of cooling water to a predetermined value (step S16).

As described above, the battery cooling control apparatus 100 reduces the power consumption required for cooling the battery system 1 by lowering the supply of cooling water in the section where the battery system 1 enters the idle mode and the heat generation decreases. In addition, the battery cooling control apparatus 100 adjusts the supply of cooling water according to the heating value of the battery system 1 in the charge mode and discharge mode of the battery system 1, thereby ensuring cooling efficiency of the battery system 1 while lowering the power consumption required for cooling the battery system 1.

While the embodiments of the present disclosure have been described in detail, it is to be understood that the disclosure is not limited to the disclosed embodiments, but on the contrary, is intended to cover various modifications and equivalent arrangements included within the spirit and scope of the appended claims.

## Claims

1. An apparatus for battery cooling control, comprising:
a cooling water control apparatus (130) configured to control a supply of cooling water for cooling a battery system (1); and
a control apparatus (150) configured to obtain a state of charge and a charge/discharge rate of the battery system (1), determine a heating value of the battery system (1) according to the state of charge and the charge/discharge rate, and control the cooling water control apparatus (130) to control the supply of the cooling water according to the heating value.

2. The apparatus for battery cooling control as claimed in claim 1, further comprising:
a storage apparatus (120) configured to store a heating value table (200) mapping corresponding heating values for each state of charge and charge/discharge rate of a battery cell,
wherein the control apparatus (150) is further configured to determine the heating value of the battery system (1) by referring to the heating value table (200).

3. The apparatus for battery cooling control as claimed in claim 1 or 2, wherein the control apparatus (150) is further configured to obtain operation mode information of the battery system (1) and control the cooling water control apparatus (130) to control the supply of the cooling water according to the operation mode information.

4. The apparatus for battery cooling control as claimed in claim 3, wherein:
the control apparatus (150) is further configured to control the cooling water control apparatus (130) so that a flow rate of the cooling water is at a predetermined value if an operation mode of the battery system (1) is an idle mode, and
the predetermined value is set so that the supply of the cooling water when the battery system (1) is operating in the idle mode is lower than the supply of the cooling water when the battery system (1) is operating in a charge mode or a discharge mode.

5. The apparatus for battery cooling control as claimed in claims 1 to 4, wherein:
the battery system (1) comprises a plurality of battery racks (10),
a cooling water passage through which the cooling water flows when flowing is provided for each of the plurality of battery racks (10),
the cooling water control apparatus (130) is further configured to control a flow rate of the cooling water supplied to the cooling water passage provided for each of the plurality of battery racks (10), and
the control apparatus (150) is further configured to determine a heating value for each of the plurality of battery racks (10) and control the cooling water control apparatus (130) to control the supply of the cooling water according to the heating value of each of the plurality of racks.

6. An energy storage system comprising:
a battery system (1), a system battery management system (2), an energy management system (3), and a power conversion system (4) and an apparatus for battery cooling control as claimed in claims 1 to 5.

7. The energy storage system as claimed in claim 6, wherein:
the power conversion system (4) supplies electrical energy stored in the battery system (1) to a power grid (5).

8. The energy storage system as claimed in claim 7, wherein:
the power conversion system (4) transfers the electrical energy stored in the battery system (1) to the power grid (5) through DC-AC conversion, or transfers the electrical energy supplied from the power grid (5) to the battery system (1) through AC-DC conversion.

9. The energy storage system as claimed in claims 6 to 8, wherein:
the power conversion system (4) performs a function of controlling electricity quality, such as active power and reactive power of the energy storage system.

10. The energy storage system as claimed in claims 6 to 9, wherein:
the power conversion system (4) performs a grid-connected protection function that protects the power grid (5) during power outages and/or performs independent operation functions such as operating the energy storage system by utilizing the battery system (1) even when there is no power source.

11. A method of cooling control of an apparatus for battery cooling control, comprising:
obtaining a state of charge and a charge/discharge rate of a battery system (1);
determining a heating value of the battery system (1) according to the state of charge and the charge/discharge rate; and
controlling a supply of cooling water for cooling the battery system (1) according to the heating value.

12. The method of cooling control as claimed in claim 11, wherein:
the determining of the heating value comprises determining the heating value of the battery system (1) by referring to a heating value table (200) mapping corresponding heating values for each state of charge and charge/discharge rate of a battery cell.

13. The method of cooling control as claimed in claim 11 or 12, further comprising obtaining operation mode information of the battery system (1),
wherein the determining of the heating value and the controlling of the supply of the cooling water are performed while the battery system (1) operates in a charge mode or a discharge mode.

14. The method of cooling control as claimed in claim 13, further comprising controlling the supply of the cooling water so that a flow rate of the cooling water is a predetermined value if the operation mode of the battery system (1) is an idle mode,
wherein the predetermined value is set so that the supply of the cooling water when the battery system (1) is operating in the idle mode is lower than the supply of the cooling water when the battery system (1) is operating in the charge mode or discharge mode.

15. The method of cooling control as claimed in claims 11 to 14, wherein:
the determining of the heating value comprises determining the heating value for each of a plurality of battery racks (10) included in the battery system (1),
and the controlling of the supply of the cooling water comprises controlling the supply of the cooling water to each of the plurality of racks according to the heating value determined for each of the plurality of racks.
